# EUROPEAN PATENT APPLICATION

(11) **EP 4 492 400 A1**
(43) Date of publication of application: **15.01.2025**
(21) Application number: 23767197.9
(22) Date of filing: 10.03.2023
(51) Int. Cl.: G21C 1/32, G21C 19/19, G21C 19/34

(54) **SMALL NUCLEAR REACTOR APPARATUS AND OPERATION METHOD THEREOF**

(30) Priority: 10.03.2022 KR 20220029772
(71) Applicant: Korea Hydro & Nuclear Power Co., Ltd, Gyeongju-si, Gyeongsangbuk-do 38120 (KR)
(72) Inventor: KIM, Mun Soo, Daejeon 34049 (KR); JUNG, Nam Du, Daejeon 34022 (KR)
(74) Representative: Taruttis, Tilman
(86) International application number: PCT/KR2023/003287
(87) International publication number: WO 2023/172096

(57) **Abstract**

A small modular reactor apparatus and an operation method thereof are provided. A small modular reactor apparatus includes a body unit including a reactor core therein; and an opening and closing unit that is provided to be mounted and detachable from the body unit to open and close an interior of the body unit, wherein the opening and closing unit is provided to be mounted and detachable based on seating downward inside the body unit, and a plurality of In-core instrument (ICI) modules for state measurement of a small modular reactor are inserted and mounted in the opening and closing unit.

## Description

### [Technical Field]

The present disclosure relates to a small modular reactor apparatus and an operation method thereof.

### [Background Art]

Small modular reactors are classified into a forced circulation type and a natural circulation type of coolant depending on the main design concept and characteristics. These small modular reactors are compact in size and have a reactor core, a steam generator, a coolant pump (in the case of forced circulation SMR), etc. concentrated inside the reactor. Therefore, when designing the interior of the reactor, an In-Core Instrument (ICI) assembly is provided to allow the coolant to smoothly flow at the bottom of the reactor core.

The ICI assembly may identify information inside the reactor that is essential for normal operation. Such an ICI assembly is provided in a way that descends from the top of the reactor to the reactor core. The control rod assembly and other facilities that are essential to the structure of the reactor are located at the top of the reactor core inside the reactor.

Multiple ICI assemblies, up to 45, are provided together with the structures inside the reactor. Since the small module reactor has a compact internal structure, there is a problem that internal flow efficiency may be reduced when the ICI assembly is also provided in an internal flow path at the top of the reactor core.

### [Disclosure]

### [Technical Problem]

Aspects of the present disclosure are to secure a flow path for internal coolant by allowing connection tubes for various measuring equipment mounted inside a small module reactor to be installed at the bottom of the reactor like a large commercial reactor.

Aspects of the present disclosure are also to contribute to improving flow efficiency, which is directly related to a reactor output, by securing the flow path.

Aspects of the present disclosure are also to contribute to improving maintainability (e.g., nuclear fuel replacement, etc.) during planned preventive maintenance.

Aspects of the present disclosure are not limited to the aspects mentioned above, and other aspects not mentioned will be clearly understood by those skilled in the art from the following description.

### [Technical Solution]

According to an aspect of the present disclosure, there is provided a small modular reactor apparatus including: a body unit including a reactor core therein; and an opening and closing unit that is provided to be mounted and detachable from the body unit to open and close an interior of the body unit, wherein the opening and closing unit is provided to be mounted and removed based on seating downward inside the body unit, and a plurality of In-core instrument (ICI) modules for state measurement of a small modular reactor are inserted and mounted in the opening and closing unit.

The opening and closing unit may be provided to be mounted and removed based on downward movement when positioned inside the body unit

A plurality of In-core instrument (ICI) modules may be inserted and mounted in the opening and closing unit.

The ICI module may be inserted and mounted so that an upper end thereof does not reach an internal position where the reactor core of the body unit is positioned.

The body unit may include a lower mounting portion where the opening and closing unit is mounted, the mounting portion may include a protruding portion having a recessed portion formed on an upper portion, and the opening and closing unit may be mounted on the mounting portion and be pressed downward by internal pressure according to the operation of the small modular reactor.

The opening and closing unit may include a seating body portion and an extension body portion extending from the seating body portion to at least a portion of a peripheral portion, and the extension body portion may enter an open space between the protruding portions and be mounted on the protruding portions, and enter the recessed portion and be mounted to be seated on an upper portion of the protruding portion.

The opening and closing unit may have a first mounting groove formed on a peripheral portion of the extension body portion, a ring-shaped first metal finishing material may be mounted in the first mounting groove to improve a sealing force of the internal space, a second mounting groove may be formed on the peripheral portion of the seating body portion, and a ring-shaped second metal finishing material may be mounted in the second mounting groove to improve a sealing force of the internal space, and the extension body portion may be mounted so that the first metal finishing material protrudes with a first numerical value larger than an outer diameter of the extension body portion and corresponds to the body unit, and the seating body portion may be mounted so that the second metal finishing material protrudes with a second numerical value larger than an outer diameter of the seating body portion and corresponds to the body unit.

The opening and closing unit may be removed from the body unit based on an internal removal operation in which the opening and closing unit is retreated into an internal space of the body unit and removed, an entry direction change operation in which an entry direction is changed at a set angle in the internal space according to the internal removal operation, and an external removal operation in which the opening and closing unit is removed from the body unit by passing through the open space according to the entry direction change operation.

The small modular reactor may perform planned preventive maintenance based on the body unit and the opening and closing unit, and the planned preventive maintenance may include nuclear fuel replacement of the small modular reactor.

The small modular reactor may secure a free space for installation of an internal coolant flow path based on the body unit and the opening and closing unit.

According to another aspect of the present disclosure, there is provided an operation method of a small modular apparatus, the operation method includes: preparing nuclear power generation of a small modular reactor; and performing the nuclear power generation of the small modular reactor, wherein the small modular reactor includes a body unit including a reactor core therein and an opening and closing unit that is provided to be mounted and removed from the body unit to open and close an interior of the body unit.

### [Advantageous Effects]

According to the small modular reactor apparatus and the operation method thereof of the present disclosure as described above, there are one or more of the following effects.

The present disclosure may secure the flow path for internal coolant by allowing connection tubes for various measuring equipment mounted inside the small module reactor to be installed at the bottom of the reactor like a large commercial reactor.

The present disclosure may also contribute to improving flow efficiency, which is directly related to the reactor output, by securing the flow path.

The present disclosure may also contribute to improving maintainability (e.g., nuclear fuel replacement, etc.) during planned preventive maintenance.

### [Description of Drawings]

FIG. 1 is a view illustrating a portion of a small modular reactor apparatus according to an embodiment of the present disclosure;
FIG. 2 is a view illustrating a configuration of the small modular reactor apparatus according to FIG. 1;
FIGS. 3 to 6 are views illustrating a state in which a lower portion of the small modular reactor apparatus according to FIG. 1 is opened and closed;
FIG. 7 is a view illustrating in detail the configuration of the small modular reactor apparatus according to FIG. 1; and
FIG. 8 is a flowchart sequentially illustrating an operation method of a small modular reactor apparatus according to an embodiment of the present disclosure.

### [Mode for Invention]

Hereinafter, embodiments of the present disclosure will be described in detail with reference to the accompanying drawings. Hereinafter, preferred embodiments of the present disclosure will be described in detail with reference to the attached drawings. Advantages and features of the present disclosure, and a method for achieving the advantages and features will become apparent with reference to the embodiments described below in detail in conjunction with the accompanying drawings. However, the present disclosure is not limited to the embodiments disclosed below, but may be implemented in a variety of different forms, these embodiments will be provided only in order to make the present disclosure complete and allow those skilled in the art to completely recognize the scope of the present disclosure, and the present disclosure is only defined by the scope of the claims. The same reference numbers indicate the same components throughout the specification.

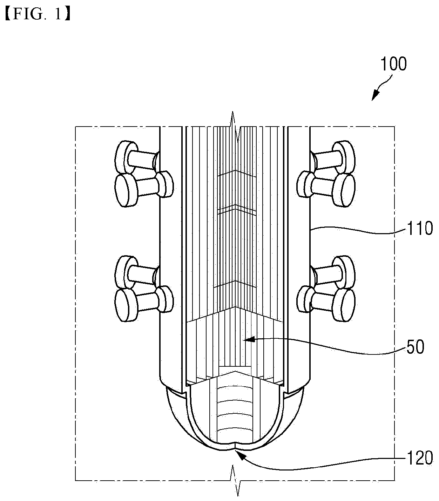

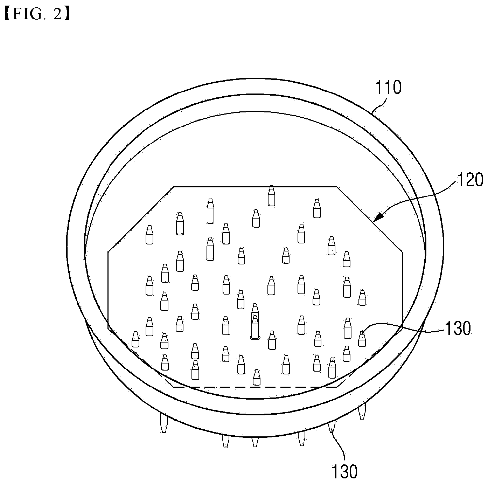

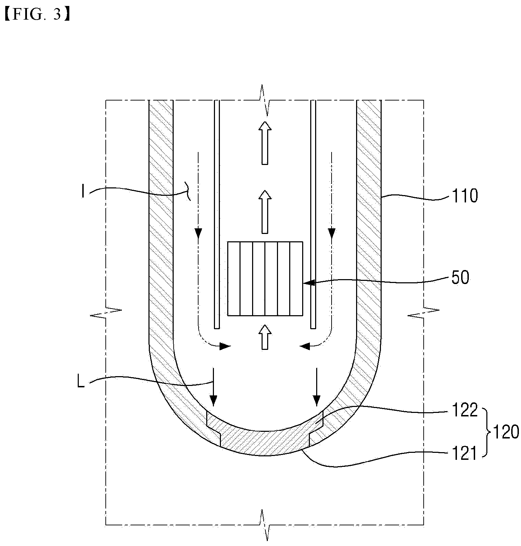

Referring to FIGS. 1 and 2, a small modular reactor apparatus 100 according to an embodiment of the present disclosure includes a body unit 110 and an opening and closing unit 120. Referring to FIG. 3, the body unit 110 includes a mounting portion 111.

The mounting portion 111 of the body unit 110 includes a protruding portion 1112. The opening and closing unit 120 includes a seating body portion 121 and an extension body portion 122. The body unit 110 of the small modular reactor apparatus 100 includes a reactor core 50 therein.

The opening and closing unit 120 of the small modular reactor apparatus 100 may be mounted on the body unit 110 to open and close the interior of the body unit 110. The opening and closing unit 120 may be removed from the body unit 110 to open and close the interior of the body unit 110.

The opening and closing unit 120 may be seated downward in the interior of the body unit 110. The opening and closing unit 120 is provided to be mounted and removed based on the downward seating. A plurality of In-core instrument (ICI) modules 130 are inserted and mounted in the opening and closing unit 120.

Furthermore, the ICI module 130 performs state measurement of the small modular reactor apparatus 100. The ICI module 130 is inserted and mounted so that an upper end thereof does not reach an internal position where the reactor core 50 of the body unit 110 is positioned.

The mounting portion 111 of the body unit 110 corresponds to a lower area where the opening and closing unit 120 is mounted. The protruding portion 1112 of the mounting portion 111 has a recessed portion 1111 formed at the top thereof.

Meanwhile, the opening and closing unit 120 is mounted on the mounting portion 111. The opening and closing unit 120 is pressed downward by internal pressure according to the operation of the small modular reactor apparatus 100. The body unit 110 is seated on the seating body portion 121 of the opening and closing unit 120.

The extension body portion 122 of the opening and closing unit 120 is provided to extend from the seating body portion 121 to at least a portion of a peripheral portion thereof. The extension body portion 122 enters an open space S between the protruding portions 1112 and is mounted on the protruding portions 1112.

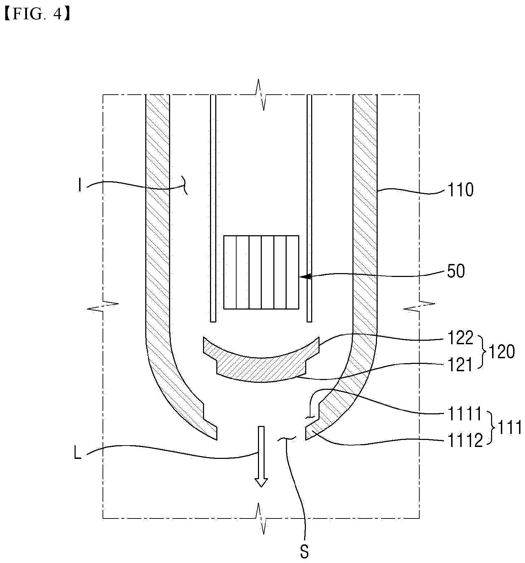

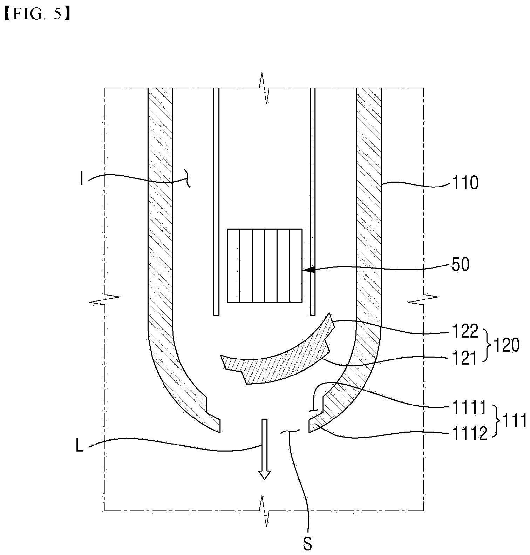

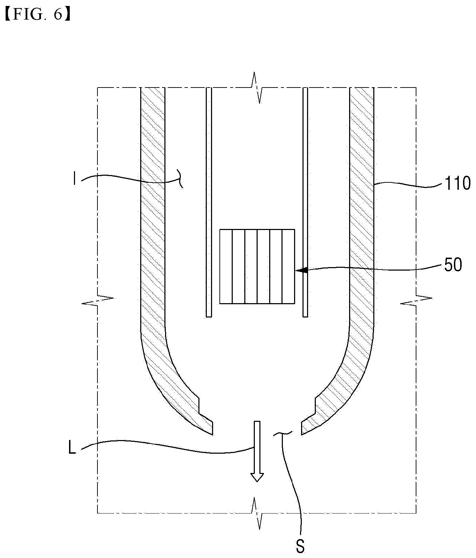

Here, the extension body portion 122 enters the recessed portion 1111 and is mounted to be seated on an upper portion of the protruding portion 1112. Referring to FIGS. 3 to 6, the opening and closing unit 120 is mounted and removed based on an internal removal operation, an entry direction change operation, and an external removal operation.

The internal removal operation of the opening and closing unit 120 corresponds to an operation in which the opening and closing unit 120 is retreated into an internal space I of the body unit 110 and removed. The entry direction change operation of the opening and closing unit 120 corresponds to an operation in which an entry direction is changed at a set angle in the internal space I according to the internal removal operation.

Furthermore, the external removal operation of the opening and closing unit 120 includes an operation of passing through the open space S according to the entry direction change operation. Subsequently, the entry direction change operation of the opening and closing unit 120 includes an operation of removing the opening and closing unit 120 from the body unit 110 after changing the entry direction to the set angle.

The small modular reactor apparatus 100 performs planned preventive maintenance based on the body unit 110 and the opening and closing unit 120. The planned preventive maintenance includes nuclear fuel replacement of the small modular reactor apparatus 100, etc.

The small modular reactor apparatus 100 secures a free space for installation of an internal coolant flow path based on the body unit 110 and the opening and closing unit 120.

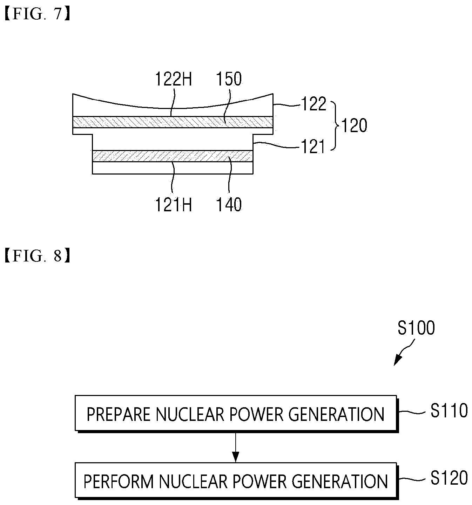

Referring to FIG. 7, the opening and closing unit 120 has a first mounting groove 121H formed on the peripheral portion of the extension body portion 122. A ring-shaped first metal finishing material 140 is mounted in the first mounting groove 121H to improve a sealing force of the internal space I.

Here, a second mounting groove 122H is formed on the peripheral portion of the seating body portion 121. A ring-shaped second metal finishing material 150 is mounted in the second mounting groove 122H to improve a sealing force of the internal space I.

The extension body portion 122 is mounted so that the first metal finishing material 140 protrudes with a first numerical value larger than an outer diameter of the extension body portion 122 and corresponds to the body unit 110.

Furthermore, the seating body portion 121 is mounted so that the second metal finishing material 150 protrudes with a second numerical value larger than an outer diameter of the seating body portion 121 and corresponds to the body unit 110.

Referring to FIG. 8, in an operation method (S100) of a small modular reactor apparatus according to an embodiment of the present disclosure, nuclear power generation of the small modular reactor apparatus 100 for operation is prepared or selected. Furthermore, the nuclear power generation of the small modular reactor apparatus 100 is performed.

The small modular reactor apparatus 100 includes a body unit 110 and an opening and closing unit 120 that is provided to be mounted and detachable from the body unit 110 to open and close an interior of the body unit 110.

Although the embodiments of the present disclosure have been described with reference to the accompanying drawings, those of ordinary skill in the art to which the present disclosure pertains will understand that the present disclosure may be embodied in other specific forms without changing the technical spirit or essential features thereof. Therefore, it should be understood that the exemplary embodiments described above are illustrative in all aspects and not restrictive.

## Claims

1. An operation method of a small modular apparatus, the operation method comprising:
preparing nuclear power generation of a small modular reactor; and
performing the nuclear power generation of the small modular reactor,
wherein the small modular reactor includes a body unit including a reactor core therein and an opening and closing unit that is provided to be mounted and detachable from the body unit to open and close an interior of the body unit.

2. The operation method of claim 1, wherein the opening and closing unit is provided to be mounted and detachable based on downward movement when positioned inside the body unit.

3. The operation method of claim 2, wherein a plurality of In-core instrument (ICI) modules are inserted and mounted in the opening and closing unit.

4. The operation method of claim 3, wherein the ICI module is inserted and mounted so that an upper end thereof does not reach an internal position where the reactor core of the body unit is positioned.

5. The operation method of claim 1, wherein the body unit includes a lower mounting portion where the opening and closing unit is mounted,
the mounting portion includes a protruding portion having a recessed portion formed on an upper portion, and
the opening and closing unit is mounted on the mounting portion and is pressed downward by internal pressure according to the operation of the small modular reactor.

6. The operation method of claim 5, wherein the opening and closing unit includes a seating body portion and an extension body portion extending from the seating body portion to at least a portion of a peripheral portion, and
the extension body portion enters an open space between the protruding portions and is mounted on the protruding portions, and enters the recessed portion and is mounted to be seated on an upper portion of the protruding portion.

7. The operation method of claim 6, wherein the opening and closing unit is separated from the body unit based on:
an internal removal operation in which the opening and closing unit is retreated into an internal space of the body unit and removed
an entry direction change operation in which an entry direction is changed at a set angle in the internal space according to the internal removal operation, and
an external removal operation in which the opening and closing unit is removed from the body unit by passing through the open space according to the entry direction change operation.

8. The operation method of claim 6, wherein the small modular reactor performs planned preventive maintenance based on the body unit and the opening and closing unit, and the planned preventive maintenance includes nuclear fuel replacement of the small modular reactor.

9. The operation method of claim 6, wherein the small modular reactor secures a free space for installation of an internal coolant flow path based on the body unit and the opening and closing unit.

10. A small modular reactor apparatus comprising:
a body unit including a reactor core therein; and
an opening and closing unit that is provided to be mounted and detachable from the body unit to open and close an interior of the body unit,
wherein the opening and closing unit is provided to be mounted and detachable based on seating downward inside the body unit, and
a plurality of In-core instrument (ICI) modules for state measurement of a small modular reactor are inserted and mounted in the opening and closing unit.
